# EUROPÄISCHE PATENTSCHRIFT

(11) **EP 0 317 496 B1**
(45) Veröffentlichungstag und Bekanntmachung des Hinweises auf die Patenterteilung: **24.02.1993**
(21) Anmeldenummer: 88810619.2
(22) Anmeldetag: 13.09.1988
(51) Int. Cl.: H04M 1/274, G06K 7/10

(54) **Telefonstation mit einem Teilnehmerverzeichnis**
Telephone apparatus provided with a subscriber directory
Poste téléphonique pourvu d'un répertoire d'abonnés

(30) Priorität: 14.09.1987 CH 3545/87
(43) Veröffentlichungstag der Anmeldung: 24.05.1989
(73) Patentinhaber: ASCOM AUTOPHON AG, CH-4503 Solothurn (CH)
(72) Erfinder: Seiler, Christian, CH-4514 Lommiswil (CH); Häni, Markus, CH-2504 Biel (CH)
(74) Vertreter: Fischer, Franz Joseph

(56) Entgegenhaltungen:
- EP-A- 0 070 697
- EP-A- 0 186 809
- DE-A- 3 223 903

## Beschreibung

Die Erfindung betrifft eine Telefonstation gemäss dem Oberbegriff des Patentanspruches 1.

In der US-PS 4 535 204 ist ein Telefonwählsystem beschrieben, welchem ein Handlesekopf zum Ablesen von im Strichcode dargestellten Teilnehmernummern zugeordnet ist. Der Handlesekopf setzt die codierten Teilnehmernummern in elektrische Signale um, diese werden gespeichert und für die Wahl in Wählsignale umgesetzt. Auf diese Weise kann das Wählen einer Teilnehmernummer durch Ablesen der codierten Teilnehmernummer halbautomatisch mit Hilfe des Handlesekopfes ausgeführt werden. Die codierte Teilnehmernummer, d.h. der Strichcode, kann zusammen mit den Ziffern der Teilnehmernummer als Wählinformation auf Werbedrucksachen aufgedruckt oder auf entsprechende kleine Etiketten angebracht werden, die ebenfalls in die Werbedrucksachen, aber auch in Teilnehmerverzeichnisse und Notizbücher eingeklebt werden können.

Im genannten Fall ist es für den Benützer umständlich, sich bei jeder neu hinzukommenden Teilnehmernummer die entsprechende Strichcode-Etikette zu beschaffen. Deshalb ist vorgeschlagen worden, die Teilnehmerstation mit einem Strichcode-Drucker zu versehen. Weil eine solche Telefonstation in Beschaffung und Unterhalt sowie Bedienung wesentlich aufwendiger ist, haben sich derartige Strichcodeanwendungen bisher nicht durchsetzen können.

Es ist Aufgabe der Erfindung, die Nachteile der bekannten Einrichtungen zu überwinden und die Vorteile, welche die Benützung des Strichcodes mit sich bringt, auch dem Durchschnitts-Telefonbenützer zugänglich zu machen.

Diese Aufgabe wird durch die im kennzeichnenden Teil des Patentanspruches 1 angeführten Merkmale gelöst.

Vorteilhafte Ausführungen der Erfindung werden in den abhängigen Ansprüchen umschrieben.

Die Erfindung ist nachstehend mit Bezugnahme auf die einfach gehaltenen, schematischen Zeichnungen beispielsweise erläutert. Es zeigen:
- Fig. 1: die Draufsicht auf eine Telefonstation und das zugehörige Teilnehmerverzeichnis,
- Fig. 2: einen Speicher der Telefonstation,
- Fig. 3: das Blockschema der Telefonstation,
- Fig. 4: das Flussdiagramm zum Einlesen eines Strichcodes in den Speicher,
- Fig. 5: die Darstellung eines Strichcodes,
- Fig. 6: das Flussdiagramm zum Anzeigen, Speichern oder Löschen einer Teilnehmernummer und
- Fig. 7: das Flussdiagramm eines Wählvorganges.

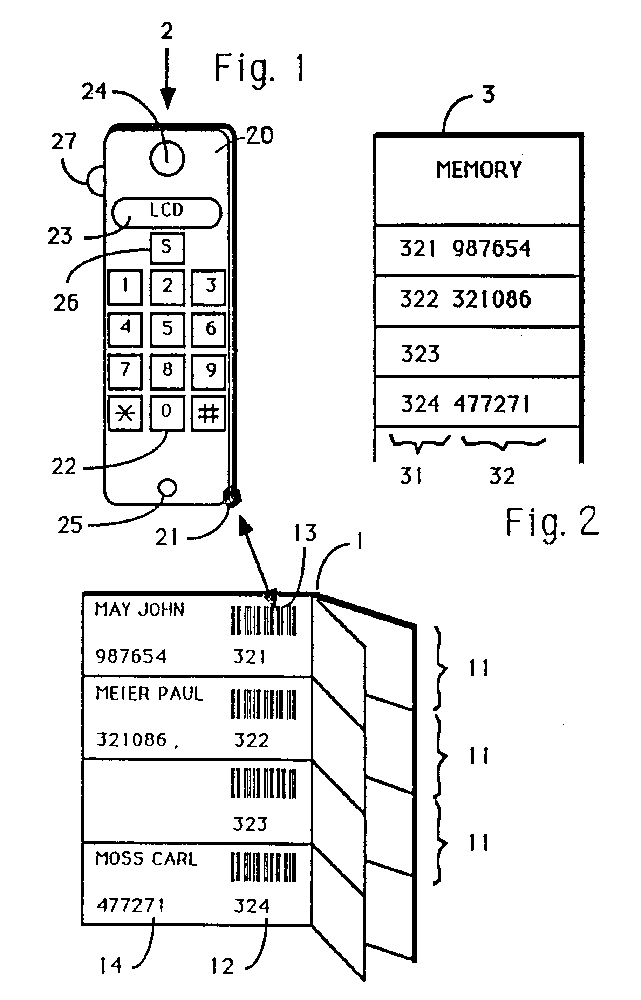

Die Fig. 1 zeigt in schematischer Form ein Ausführungsbeispiel eines Teilnehmerverzeichnisses 1 und die Draufsicht auf eine Ausführungsform der erfindungsgemässen Telefonstation 2.

Das Teilnehmerverzeichnis 1 ist ähnlich ausgebildet wie ein Notizbuch, wobei aber nur eine Seite vollständig gezeichnet ist. Jede Seite des Teilnehmerverzeichnisses 1 ist in gleich grosse Felder 11 eingeteilt. In jedes dieser Felder ist je eine fortlaufende, zwischen 100 und 999 liegende Kurzwahlnummer 12 und der dieser Kurzwahlnummer entsprechende Strichcode 13 voreingedruckt. Der Benützer des Teilnehmerverzeichnisses 1 kann nun jeweils nach Belieben Namen und Teilnehmernummern 14 seiner wichtigsten Gesprächspartner in das Teilnehmerverzeichnis eintragen und vor dem ersten Gebrauch des Teilnehmerverzeichnisses in einen in der Fig. 2 angedeuteten Speicher 3 der Telefonstation 2 auf eine weiter unten näher beschriebene Weise einspeichern.

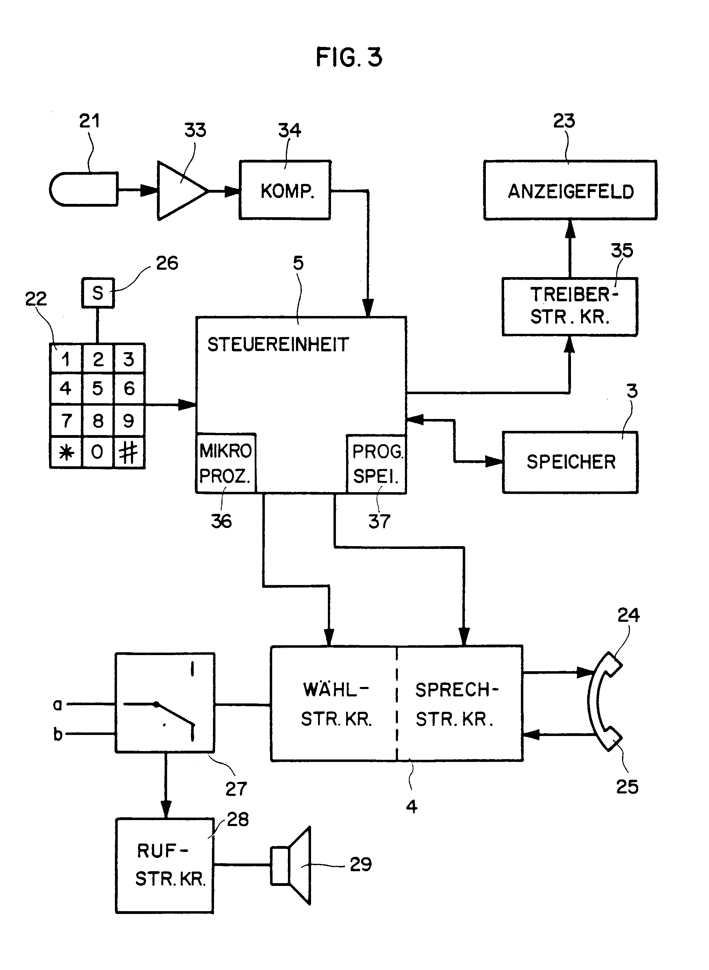

Das Blockschema der in der Fig. 1 in der Draufsicht gezeigten Telefonstation 2 ist in der Fig. 3 dargestellt. Die Telefonstation 2 ist in einem die Form eines Mikrotels aufweisenden Gehäuse 20 untergebracht und umfasst einen Wähl-Sprech-Stromkreis 4, eine Steuereinheit 5, den Speicher 3 zum Speichern der Teilnehmernummern 14 an die durch die Kurzwahlnummern 12 definierten Speicherplätze 31 bzw. 32, einen als Gabelkontakt wirkenden Schalter 27, der an einer Schmalseite des Gehäuses 20 angeordnet ist sowie einen Rufstromkreis 28 mit einem daran angeschlossenen akustischen Wandler 29. Auf der Frontseite des Gehäuses 20 ist weiter eine Tastatur 22 für die manuelle Wahl und zur Eingabe der Teilnehmernummern zum Speichern derselben in dem Speicher 3 vorhanden. Hinter einem Fenster des Gehäuses 20 kann ein Anzeigefeld 23 vorgesehen sein, welches über einen Treiberstromkreis 35 mit der Steuereinheit 5 verbunden ist.

An einer Ecke des Gehäuses 20 ist ein optischer Sender/Empfänger 21 angeordnet, der zusammen mit dem Gehäuse 20 einen Handstrichcodeleser bildet. Die vom Sender/Empfänger 21 erzeugten elektrischen Signale werden mittels einem Verstärker 33 verstärkt und einem Komparator 34 zugeführt, welcher in Abhängigkeit des abgelesenen Strichcodes schmale und breite Impulse an die Steuereinheit 5 liefert. Hinter entsprechenden Oeffnungen im Gehäuse 20 ist ein Hörer 24 bzw. ein Mikrophon 25 angeordnet. Die Tastatur 22 weist eine zusätzliche Speichertaste 26 auf. Die Steuereinheit 5 umfasst einen Mikroprozessor 36 und einen Programmspeicher 37.

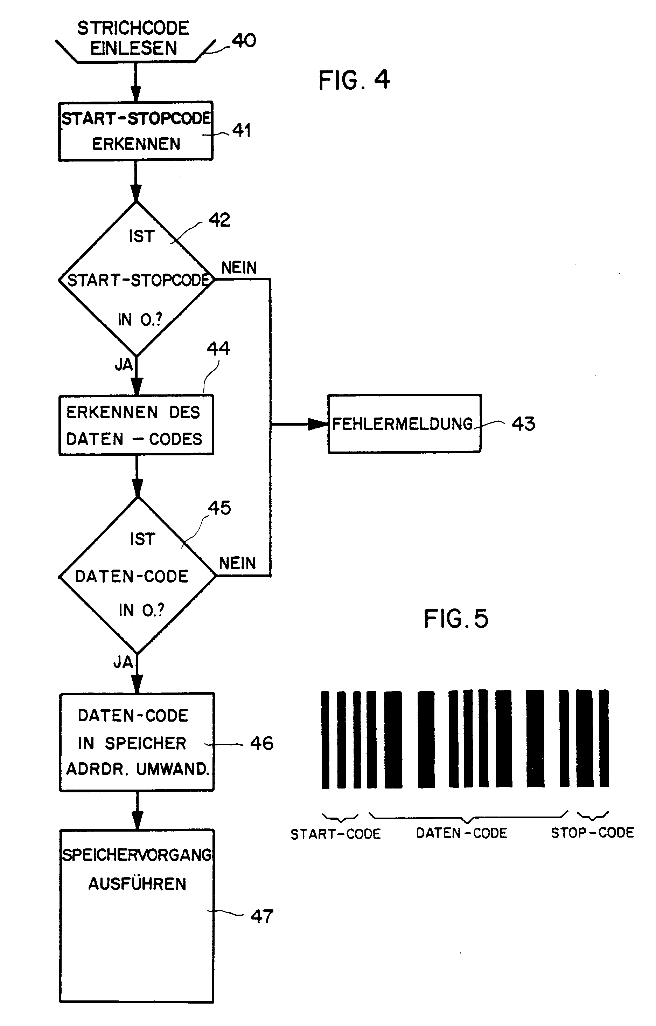

Die Fig. 4 zeigt ein vereinfachtes Flussdiagramm des Einlesevorganges und die Fig. 5 den Aufbau eines Strichcodes 13 in Fig. 1. Dieser ist in drei Abschnitte unterteilt, nämlich den Startcode, den Datencode und den Stopcode. Das in der Fig. 4 dargestellte Programm ist im Programmspeicher 37, der vorzugsweise ein ROM ist, enthalten. Die Startphase 40 wird durch das Einlesen des Strichcodes 13 in Fig. 1 mittels des Strichcodelesers 20, 21 eingeleitet. Danach wird der eingelesene Strichcode in einem nicht dargestellten Kurzzeitspeicher gespeichert und die eingespeicherte Information einer Prüfung 41, Fig. 4, unterzogen. An der Entscheidungsstelle 42 wird entschieden, ob der Start-/Stopcode, Fig. 5, richtig erkannt worden ist oder nicht. Wenn der Start-/Stopcode nicht richtig erkannt worden ist, führt dies zu einer Fehlermeldung 43. Ist der Start-/Stopcode richtig erkannt worden, so erfolgt eine Datencode-Ueberprüfung 44. An einer Entscheidungsstelle 45 wird entschieden, ob der Datencode richtig erkannt worden ist oder nicht. Wenn die Prüfung ergibt, dass der Datencode nicht richtig ist, wird ebenfalls eine Fehlermeldung 43 erzeugt. Wird der Datencode als in Ordnung erkannt, so erfolgt an der Stelle 47, Fig. 4, die Umwandlung in die entsprechende Speicheradresse 31, Fig. 2. Mit dieser Speicheradresse wird an der Stelle 4, Fig. 4, der Speicher 3 adressiert und es können die nachfolgend beschriebenen Operationen durchgeführt werden.

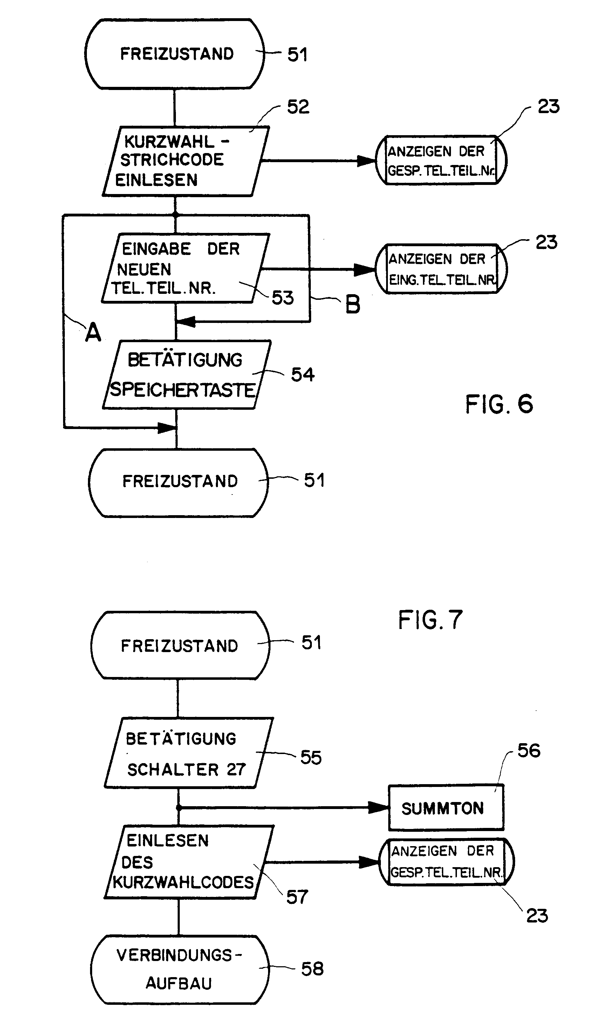

Die Fig. 6 zeigt das vereinfachte Flussdiagramm für das Anzeigen, Einspeichern oder Löschen einer Teilnehmernummer. Gemäss dem hier gezeigten Beispiel wird die Teilnehmerleitung nicht belegt, d.h. sie befindet sich im Freizustand 51. Dies bedeutet, dass der Schalter 27, Fig. 1, 3, nicht betätigt wird. Es wird mit Hilfe des Strichcodelesers 20, 21 der Kurzwahlcode 13 auf einem der Felder 11 eingelesen, z.B. auf jenem, das mit "May John" beschriftet ist. Dabei wird der in der Fig. 4 ausführlicher dargestellte Einlesevorgang 52, Fig. 6, ausgeführt. Die am durch die ausgelesene Kurzwahlnummer "321" bestimmten Speicherplatz 31, Fig. 2, gespeicherte Teilnehmernummer 32, beispielsweise "987654" wird im Anzeigefeld 23 angezeigt. Ergibt die visuelle Prüfung, dass die angezeigte Teilnehmernummer mit jener im Feld 11 von May John übereinstimmt, d.h. wenn keine Korrektur notwendig ist, so kehrt das Programm nach einer bestimmten Wartezeit gemäss der Schleife A, Fig. 6, wieder zum Freizustand 51 der Teilnehmerleitung zurück.

Wenn die Teilnehmernummer geändert werden soll, wird sofort nach dem Einlesen 52 des Strichcodes und dem Erscheinen der alten Teilnehmernummer und vor Ablauf der erwähnten Wartezeit die neue Teilnehmernummer eingegeben. Diese Eingabe 53 erfolgt mittels der Tastatur 22. Nun erscheint die neu eingegebene Teilnehmernummer auf dem Anzeigefeld 23. Durch die Betätigung 54 der Speichertaste 26 wird die neue Teilnehmernummer 32, Fig. 2, an dem durch den ausgelesenen Kurzwahlcode bestimmten Speicherplatz 31 des Speichers 3 gespeichert. Danach kehrt das Programm zum ursprünglichen Freizustand 51 der Teilnehmerleitung zurück. Dieser Vorgang wird beim Erstellen des Teilnehmerverzeichnisses 1 für jeden Namen wiederholt. Soll eine ungültige Teilnehmernummer ersatzlos gelöscht werden, so wird nach dem Einlesen 52 des Strichcodes 12, Fig. 1, z.B. "323", sofort, gemäss der Schleife B in Fig. 6, die Speichertaste 26, "S" in Fig. 1 und 3, betätigt. Diese Betätigung 54 hat zur Folge, dass die am Speicherplatz "323" eingespeicherte, ungültige Teilnehmernummer gelöscht wird, wie in Fig. 2 durch die leere Stelle 32 des Speichers 3 angedeutet ist.

Wenn das Teilnehmerverzeichnis einmal angelegt ist, kann eine halbautomatische Wahl der betreffenden Teilnehmernummer gemäss dem in der Fig. 7 dargestellten Programmablauf durchgeführt werden. Ausgehend vom Freizustand 51 der Teilnehmerleitung erfolgt deren Belegung, d.h. die Betätigung 55 des Schalters 27, Fig. 1, 3, welcher dem Gabelschalter entspricht. Nach dem Empfang des Summtones 56 von der Telefonzentrale erfolgt das Einlesen 57 des Kurzwahlstrichcodes 13 mittels des obenbeschriebenen Strichcodelesers 20/21 aus dem betreffenden Feld 11. Die dazugehörige, aus dem Speicher 3 ausgelesene Teilnehmernummer 32 wird im Anzeigefeld 23 angezeigt und durch den Mikroprozessor 36 in der Steuereinheit 5 in Wählsignale umgesetzt. Diese Wählsigna|e werden dem Wahl-Sprech-Stromkreis 4 zugeführt und gelangen über den Schalter 27 und die Teilnehmerleitung zur nicht dargestellten Telefonzentrale, wodurch der Verbindungsaufbau 58 erreicht wird. Falls der angerufene Teilnehmer abhebt, kann das Gespräch beginnen. Zum Wählen einer Telefonteilnehmernummer, insbesondere zum Wählen eines Partners im Ausland, ist es somit bloss notwendig, nach dem Betätigen des Schalters 27 mit dem Handstrichcodeleser 20, 21 den betreffenden Kurzwahl-Strichcode 13 im Telefonverzeichnis 1 einzulesen. Danach erfolgt die Wahl automatisch.

Indem statt der Teilnehmernummer eine Kurzwahlnummer strichcodiert wird, wird das Drucken des Teilnehmerverzeichnisses zu einem einmaligen Vorgang, unabhängig vom sich ständig ergänzenden Bestand der häufig benutzten Teilnehmernummern. Für den ganzen Satz der zum Beispiel dreistelligen neunhundert Kurzwahlnummern können somit die Strichcodes zum voraus gebildet werden. Zu jeder Fabrikationsserie der Telefonstationen 2 wird gleichzeitig eine entsprechende Anzahl Strichcodesätze gedruckt und mit den Stationen zusammen ausgeliefert und den Benützern übergeben.

Die Erfindung kann aber noch auf andere, hier nicht zeichnerisch dargestellte Art, ausgeführt werden.

Wenn für einzelne Teilnehmernummern ein Strichcode schon vorhanden ist, kann dieser Strichcode ebenfalls eingelesen werden, anstatt dass die ganze Nummer eingetippt werden muss. Voraussetzung dazu ist aber, dass die Steuereinheit die beiden Strichcode-Arten unterscheiden kann. Dies lässt sich auf verschiedene Arten erreichen:

Wenn beispielsweise dafür gesorgt ist, dass die Kurzwahlnummern und die Teilnehmernummern eindeutig getrennte Zahlenbereiche umfassen, kann dies als Unterscheidungskriterium dienen. Wenn z.B. alle Teilnehmernummern, einschliesslich die Dienstnummern ein- , zwei-, vier- oder mehrstellig vorgegeben sind, können alle Kurzwahlnummern ausschliesslich dreistellig gewählt werden.

Es können aber auch die Kurzwahl-Strichcodes mit speziellen vor- und/oder nachgestellten Strichcodezeichen abweichend von der Norm ergänzt werden, was ebenfalls von der Steuereinheit 5 erkannt und ausgewertet werden kann. Als Norm für die Strichcodierung ein- und mehrstelliger Zahlen hat sich z.B. der sogenannte Code 2/5 überlappt bewährt.

Anstelle von auschliesslich Ziffern kann der Kurzwahlstrichcode auch Buchstaben enthalten. Solche Kombinationen können allerdings nicht mit dem Code 2/5 überlappt dargestellt werden.

Bei der Anwendung solcher oder ähnlicher Unterscheidungsmerkmale können auch einzelne Ziffern oder Befehle der Tastatur (z.B. 1 ... 0, *, #, S) als Strichcode dargestellt werden. Dabei wird vorzugsweise das so codierte Bild der Tastatur in das Teilnehmerverzeichnis gedruckt oder als Etikette z.B. in das Verzeichnis geklebt. In diesem Fall werden dann die mit Speicher oder Wählvorgängen verbundenen Tastatureingaben durch Strichcode-Lesevorgänge ersetzt.

Nicht im Teilnehmerverzeichnis enthaltene Teilnehmer mit selten benützten Telefonteilnehmernummern können selbstverständlich mit Hilfe der Tastatur 22 wie bisher direkt gewählt werden.

Selbstverständlich kann die räumliche Anordnung der verschiedenen Baueinheiten abweichend vom beschriebenen Beispiel als einzelne, untereinander verbindbare Baugruppen ausgeführt werden.

Mit der obenbeschriebenen Telefonstation kann auch der gewöhnliche Benützer die Vorteile des Strichcodes nutzen, obwohl er über keine aufwendige und dementsprechend teure Telefonstation verfügt.

## Patentansprüche

1. Telefonstation mit einem Teilnehmerverzeichnis (1), das Strichcodes (13) und diesen zugeordnete Teilnehmernummern enthält, einem Strichcodeleser (20, 21), einem Speicher (3) zur Aufnahme und Abgabe der vom Strichcodeleser (20, 21) aufgenommenen Wählinformationen, einer Steuereinheit (5) und einem Wahl-Sprech-Stromkreis (4) zur Uebermittlung der aus dem Speicher (3) ausgelesenen Wählinformationen über eine Teiinehmerleitung (a, b) zur Telefonzentrale, dadurch gekennzeichnet, dass die Seiten des Teilnehmerverzeichnisses in Felder (11) unterteilt sind, dass in jedes Feld je ein Strichcode (13) gedruckt ist, dass in jedem Feld Platz zur Eintragung wenigstens des Namens eines Teilnehmers vorhanden ist, dass jeder Strichcode zum eindeutigen Unterscheiden von anderen Wählinformationen einer bis zu dreistelligen Kurzwahlnummer (12) entspricht, dass die Steuereinheit (5) so programmiert ist, dass die vom Strichcodeleser (20, 21) aufgenommenen und in elektrische Signale umgewandelten Kurzwahlnummern (31) zur Adressierung der anderen Wählinformationen (32) im Speicher (3) dienen und dass die Steuereinheit (5) die vom adressierten Speicherplatz des Speichers (3) ausgelesenen Wählinformation dem Wahl-Sprech-Stromkreis (4) zuführt.

2. Telefonstation nach Anspruch 1, dadurch gekennzeichnet, dass die Steuereinheit (5) einen Programmspeicher (37) und einen Mikroprozessor (36) umfasst und dass im Programmspeicher die zum Ausführen der Wahl mit der vom erstgenannten Speicher (3) ausgelesenen Teilnehmernummer und zum Einspeichern der vom Benutzer ausgewählten Teilnehmernummer an den durch die Kurzwahlnummern bestimmten Speicherplätzen des erstgenannten Speichers (3) notwendigen Programme gespeichert sind.

3. Telefonstation nach Anspruch 1 oder 2, dadurch gekennzeichnet, dass der vorgedruckte Kurznummer-Strichcode (13) ausser einem die Kurzwahlnummer (12) darstellenden genormten Mittelteil einen vor- und/oder nachgeschalteten, nicht der Norm entsprechenden Endteil aufweist und dass die Steuereinheit (5) diese Endteile bzw. diesen Endteil dazu benützt, die betreffende Kurzwahlnummer von irgendwelchen Norm-Strichcode-Eingaben (14) zu unterscheiden, die vorzugsweise eine normal-strichcodierte Teilnehmernummer (14) enthalten.

4. Telefonstation nach Anspruch 1 oder 2, dadurch gekennzeichnet, dass ausser der Kurzwahlnummer (12) auch die Ziffern und Befehlssymbole (1...0, *, #, S) der Tastatur (22) der Wählanordnung als Strichcode dargestellt und auf einen mobilen Wählinformationsträger vorzugsweise auf dem Teilnehmerverzeichnis (1) aufgedruckt sind.

## Claims

1. Telephone apparatus provided with a subscriber directory (1) which contains bar codes (13) and associated subscribers' numbers, a bar-code reader (20, 21), a data memory (3) for storing and outputting dialling data read by the bar-code reader (20, 21), a control unit (5), and a dial speech circuit (4) for transmitting dialling data read out from the data memory (3) over a subscriber line (a, b) to the central office, characterized in that the pages of the subscriber directory are divided into sections (11), in that a bar code (13) is pre-printed in each section, in that in each section there is sufficient space for entering at least the subscriber's name, in that each bar code corresponds to a one- to three-digit speed-dialling number (12) in order to distinguish it clearly from other dialling data, in that the control unit (5) is so programmed that the speed-dialling numbers (31) read by bar-code reader (20, 21) and converted into electrical signals serve to address the other dialling data (32) in the data memory (3) and in that control unit (5) supplies the dialling data read out of the addressed memory location of data memory (3) to dial-speech circuit (4).

2. The telephone apparatus as set forth in claim 1 characterized in that the control unit (5) comprises a programme memory (37) and a microprocessor (36) and in that the necessary programmes are stored in the programme memory for carrying out dialling with the subscriber numbers read out from first-mentioned data memory (3) and for storing subscriber numbers selected by the user at memory locations determined by the speed call numbers of the first-mentioned data memory (3).

3. The telephone apparatus as set forth in claim 1 or 2 characterized in that the pre-printed speed-dialling number bar code (13) includes, in addition to a standardized middle portion representing said speed-dialling number (12), a non-standard prefixed and/or suffixed end portion, and in that the control unit (5) utilizes said end portion or portions for distinguishing the respective speed-dialling number from any standard bar-code entries (14), which preferably contain a normally bar-coded subscriber number (14).

4. The telephone apparatus as set forth in claim 1 or 2 characterized in that, in addition to the speed-dialling number (12), the numerals and command symbols (1...=, *, #, S) of the key pad (22) are represented in bar-code form and printed on a mobile dialling information carrier preferably on the subscriber directory (1).

## Revendications

1. Poste téléphonique muni d'un répertoire d'abonnés (1) contenant des codes barres (13) et des numéros d'abonnés correspondant à ceux-ci, un lecteur de codes barres (20,21), une unité de mémoire (3) pour la réception et la sortie des informations de sélection reçues par le lecteur de codes barres (20,21), une unité de commande (5) et un circuit (4) de sélection-conversation pour la transmission des informations de sélection lues dans l'unité de mémoire vers une centrale téléphonique, par l'intermédiaire d'une ligne d'abonné (a,b), caractérisé en ce que les pages du répertoire d'abonnés sont divisées en champs (11), un code barre (13) étant imprimé dans chaque champ, en ce que chaque champ comprend de la place pour l'inscription d'au moins le nom d'un abonné, en ce que chaque code barre comprend un numéro de sélection abrégé (12) ayant jusqu'à trois positions, pour clairement distinguer les autres informations de sélection, en ce que l'unité de commande (5) est programmée de telle manière que les numéros de sélection abrégés (31) provenant du lecteur de codes barres (20,21) et transformés en signal électrique servent à l'adressage des autres informations de sélection (32) dans l'unité de mémoire (3) et en ce que l'unité de commande (5) alimente le circuit de sélection-conversation (4) par les informations de sélection lues dans les positions de mémoire adressées de l'unité de mémoire (3).

2. Poste téléphonique selon la revendication 1, caractérisé en ce que l'unité de commande (5) comprend une mémoire de programme (37) et un microprocesseur (36) et en ce que des programmes nécessaires pour exécuter la sélection à partir du numéro d'abonné lu dans ladite unité de mémoire (3) et pour mémoriser le numéro d'abonné sélectionné par l'utilisateur dans les positions de mémoire déterminées de ladite unité de mémoire (3) par les numéros de sélection abrégés, sont mémorisés dans la mémoire de programme.

3. Poste téléphonique selon l'une des revendications 1 ou 2, caractérisé en ce que le code barre d'un numéro abrégé préimprimé (13) comprend, hormis une partie centrale normalisée correspondant au numéro de sélection abrégé (12), des parties de terminaison non normalisée, couplée avant et/ou après ladite partie centrale, et en ce que l'unité de commande (5) utilise cette ou ces parties de terminaison pour distinguer le numéro de sélection abrégé concerné de n'importe quelle entrée de code barre normalisé (14) qui de préférence comprend un numéro d'abonné (14) sous forme de code barre normal.

4. Poste téléphonique selon l'une des revendications 1 ou 2, caractérisé en ce que, hormis le numéro de sélection abrégé (12), les chiffres et symboles de commande (1...0, *, #, S) du clavier (22) de l'instruction de sélection sont représentés et imprimés sur un support d'information de sélection mobile, de préférence sur le répertoire d'abonnés (1) .
